(19) Europäisches Patentamt
European Patent Office
Office européen des brevets

(11) Veröffentlichungsnummer: **0 150 497**
**A2**

# (12) EUROPÄISCHE PATENTANMELDUNG

(21) Anmeldenummer: **84116309.0**

(22) Anmeldetag: **27.12.84**

(51) Int. Cl.[4]: **C 08 K 5/52**, C 08 L 67/02, C 08 L 69/00

(30) Priorität: **05.01.84 DE 3400238**

(43) Veröffentlichungstag der Anmeldung: **07.08.85 Patentblatt 85/32**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld (DE)**
Erfinder: **Rathmann, Dietrich, Dr., Alte Landstrasse 119, D-5090 Leverkusen (DE)**
Erfinder: **Hucks, Uwe, Dipl.-Ing., Am Marienstift 30, D-4234 Alpen (DE)**
Erfinder: **Tacke, Peter, Dr., Brandenburger Strasse 12, D-4150 Krefeld (DE)**
Erfinder: **Bottenbruch, Ludwig, Dr., Wöhlerstrasse 5, D-4150 Krefeld (DE)**

(54) **Stabilisierte aromatische Polyester und Polyestercarbonate.**

(57) Die Erfindung betrifft gegen thermischen und oxidativen Abbau sowie daraus resultierende Verfärbungen stabilisierte aromatische Polyester und Polyestercarbonate, die als Stabilisatoren 0,01 bis 2 Gew.% Mono-, Bis- oder Tris-(3-alkyl-oxetan-3-yl-methyl)-phosphite enthalten.

EP 0 150 497 A2

0150497

BAYER AKTIENGESELLSCHAFT 5090 Leverkusen, Bayerwerk
Konzernverwaltung RP
Patentabteilung G/Ke-c

# Stabilisierte aromatische Polyester und Polyestercarbonate

Gegenstand der Erfindung sind gegen thermischen und oxidativen Abbau sowie daraus resultierende Verfärbungen stabilisierte aromatische Polyester und Polyestercarbonate, die als Stabilisatoren 0,01 bis 2 Gew.-% Mono-, Bis- oder Tris-(3-alkyl-oxetan-3-yl-methyl)-phosphite enthalten.

Aromatische Polyester und Polyestercarbonate aus Bisphenolen, aromatischen Dicarbonsäuren und gegebenenfalls Kohlensäure besitzen hervorragende mechanische und thermische Eigenschaften, besonders gute Formbeständigkeit in der Wärme, die den Dauereinsatz mancher Produkte dieser Werkstoffgruppe noch bei Temperaturen um 180°C zuläßt.

Für die Verwendung bei derart hohen Temperaturen müssen die aromatischen Polyester und Polyestercarbonate jedoch gegen thermisch-oxidativen Abbau (erkennbar am Absinken der relativen Lösungsviskosität) und damit zumeist verbundenen Verfärbungen stabilisiert werden.

Als Stabilisatoren sind zahlreiche Derivate der phosphorigen Säure, vorzugsweise Ester, beispielsweise aus den japanischen Patentschriften 9035457, 9035458, 4851047, 52090556, 52100551, 7503455 und der deutschen Offenlegungsschrift 2633944 bekannt. Als Alkohol-Komponente enthalten diese Phosphite aliphatische Alkohole oder Phenole.

Die Wirksamkeit der Phosphite als Stabilisatoren in aromatischen Polyestern hängt außer von ihrer Struktur auch von der eingesetzten Menge ab, wobei im allgemeinen die Wirkung mit steigender Menge zunimmt.

Da die Phosphite in größeren Mengen als Weichmacher wirken und die Wärmeformbeständigkeit herabsetzen und bisweilen selbst zur Verfärbung der aromatischen Polyester und Polyestercarbonate beitragen, ist ihre Menge nach oben begrenzt.

Als wirksame Stabilisatoren für aromatische Polyester haben sich (gemäß der japanischen Patentschrift 55069647) auch bestimmte Oxetanverbindungen erwiesen, beispielsweise Tris(2-ethyloxetan-2-yl-methyl)-phosphat.

Bei der Suche nach wirksameren Stabilisatoren wurde gefunden, daß Phosphite, deren alkoholische Komponente einen in Position 3 substituierten O x e t a n r i n g enthalten, eine überragende stabilisierende Wirksamkeit für aromatische Polyester und Polyestercarbonate besitzen.

Gegenstand der Erfindung sind somit Formmassen auf Basis aromatischer Polyester und Polyestercarbonate, die als Stabilisatoren 0,01 bis 2, bevorzugt 0,05 bis 1 Gew.-% von Phosphiten der Formel I enthalten.

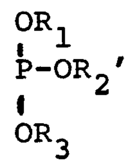

(I)

worin mindestens einer, aber auch 2 oder 3 der Reste $R_1$ bis $R_3$ der Formel

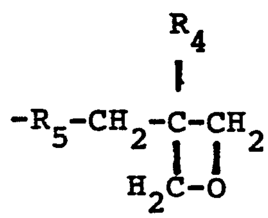

(II)

entsprechen,
$R_4$ einen $C_1$- bis $C_6$-Alkylrest darstellt oder mit $R_1$ eines anderen P-Atoms zusammen einen Hexahydro-p-xylylen- oder $-(CH_2)_x$-Rest, mit x = 1 bis 6, worin die übrigen Reste $R_1$ bis $R_3$ $C_1$- bis $C_{10}$- und Alkylreste oder durch bis zu 2 $C_1$-$C_6$-Alkyl- oder Cycloalkylreste substituierte Phenylreste sind, und $R_5$ eine einfache Bindung, Phenylen oder Oxiphenylen ist.

Beispiele für die erfindungsgemäßen Phosphitstabilisatoren sind:

Tris- (3-ethyloxetanyl-3)-methyl-phosphit,
Tris- (3-pentyloxetanyl-3)-methyl-phosphit,
Phenyl-bis- (3-ethyloxetanyl-3)-methyl-phosphit.

Die erfindungsgemäßen Stabilisatoren können einzeln oder in Kombination miteinander eingesetzt werden.

Man kann die erfindungsgemäßen Phosphitstabilisatoren in bekannter Weise durch Umesterung der entsprechenden Oxetangruppen-haltigen Alkohole oder Phenole mit Trialkyl- oder Triarylphosphiten oder durch Umsetzen von Phosphortrichlorid mit den entsprechenden Alkoholen und Phenolen, gegebenenfalls im Gemisch mit Oxetangruppen-freien Alkoholen oder Phenolen in Gegenwart säurebindender Mittel (vgl. US-Patentschrift 3 209 013) herstellen.

Als Oxetangruppen-haltige Alkohole oder Phenole kommen z.B. in Betracht: 3-Ethyl-3-hydroxymethyloxetan, 3-Pentyl-3-hydroxymethyloxetan, 3,3-Bis-hydroxymethyloxetan, p-(3-Ethyloxetanyl-3-oxymethyl)-phenol.

Als bei der Herstellung der Phosphite gegebenenfalls mitzuverwendende Hydroxylverbindungen seien genannt: Decylalkohol, Stearylalkohol, Benzylalkohol, Glykol, Trimethylolpropan, Pentaerythrit, Glycerin, Sorbit, Neopentylglykol, Dimethylolcyclohexan, Diethylenglykol, Thiodiglykol, Phenol, p-Chlorphenol, p-Nonylphenol, Brenzcatechin, Di-t-butylbrenzcatechin.

Als besonders geeignet hat sich Tris-(3-ethyloxetanyl-3-methyl)-phosphit erwiesen, das als symmetrisches Trialkylphosphit aus dem leicht zugänglichen 3-Ethyl-3-hydroxymethyloxetan (vgl. US-Patentschrift 2 910 483) einfach herzustellen ist. Die Anwesenheit von drei Oxetangruppen im Molekül führt zu besonders hoher Wirksamkeit dieser Verbindung.

Aromatische Polyester im Sinne der Erfindung sind aus aromatischen Dicarbonsäuren und Diphenolen aufgebaut; am Aufbau der Polyestercarbonate ist zusätzlich noch mindestens ein Kohlensäurederivat, z.B. Phosgen, beteiligt.

Bevorzugte aromatische Dicarbonsäuren sind beispielsweise: Isophthalsäure, Terephthalsäure, Diphenylether-4,4'-dicarbonsäure, Naphthalin-2,6-dicarbonsäure. Besonders bevorzugt sind Iso- und Terephthalsäure. Bevorzugtes Kohlensäurederivat ist Phosgen.

Bevorzugte Diphenole für die Herstellung der erfindungsgemäßen aromatischen Polyester und Polyestercarbonate sind Verbindungen der Formel:

$$HO - Z - OH \qquad (III),$$

worin Z einen zweiwertigen ein- oder mehrkernigen aromatischen Rest mit 6 - 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel IV

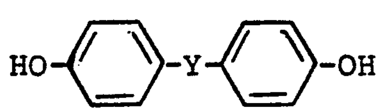 (IV),

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-, $-\underset{\underset{O}{\|}}{S}-$, $-SO_2-$ oder $-\underset{\underset{O}{\|}}{C}-$ bedeutet, sowie deren kernalkylierte und kernhalogenierte Derivate, z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl-dissopropylbenzole,

sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon, sowie deren di- und tetrahalogenierte Derivate. Besonders bevorzugt ist Bisphenol A. Es können auch beliebige Mischungen der genannten Diphenole verwendet werden.

Mögliche Verzweigungsmittel sind in den DE-OS 2940024 und 3007934 genannt.

Als Kettenabbrecher für die aromatischen Polyester und Polyestercarbonate werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht.

Die Kettenabbrecher können, soweit es sich um phenolische Verbindungen handelt, dem Reaktionsgemisch vor Beginn oder während der Reaktion zugesetzt werden. Es muß jedoch noch genügend Säurechlorid und/oder Phosgen zur Verfügung stehen, damit sie reagieren und die Kette begrenzen können; z.B. kann der Kettenabbrecher zusammen mit dem Diphenol eingesetzt werden, in der Lösung der Chloride der aromatischen Dicarbonsäuren enthalten sein, oder dem Reaktionsgemisch nach Herstellung eines Vorkondensats zugesetzt werden.

Sofern man als Kettenabbrecher Säurechloride und Chlorkohlensäureester verwendet, werden sie vorzugsweise gemeinsam mit den aromatischen Dicarbonsäuredichloriden und/oder Phosgen eingesetzt. Diese Kettenabbrecher können dem Reaktionsgemisch auch noch zu einem Zeitpunkt zugesetzt werden, wenn die Chloride der Dicarbonsäuren

und das Phosgen schon weitgehend oder vollständig abreagiert haben.

Am Aufbau der aromatischen Polyester und Polyestercarbonate können auch bis jeweils 30 Mol-% der Dicarbonsäuren und Dihydroxyverbindungen aliphatische Baugruppen, z.B. Adipinsäure, Butandiol-1,4 beteiligt sein.

Weiterhin können die aromatischen Polyester und Polyestercarbonate teilweise aus aromatischen Hydroxycarbonsäuren, z.B. p-Hydroxy-benzoesäure aufgebaut sein. Der Anteil solcher Hydroxycarbonsäuren kann bis zu 100 Mol-% (bezogen auf Bisphenol) betragen.

Falls Iso- und Terephthalsäure gemeinsam am Aufbau der aromatischen Polyester und Polyestercarbonate beteiligt sind, kann deren Verhältnis 1 : 20 bis 20 : 1 betragen.

Die erfindungsgemäß stabilisierten aromatischen Polyestercarbonate können bis zu 80 Mol-%, vorzugsweise bis zu 50 Mol-% Carbonatgruppen enthalten, bezogen auf die Summe von Ester- und Carbonatgruppen.

Sowohl der Ester- als auch der Carbonatanteil der erfindungsgemäßen aromatischen Polyestercarbonate kann in Form von Blöcken oder statistisch verteilt im Polykondensat vorliegen.

Die Herstellung der aromatischen Polyester und Polyestercarbonate ist bekannt und z.B. in DE-OS 1495626, 2232877, 2703376, 3000610, 2714544, 2940024, 3007934 beschrieben. Besonders bevorzugt ist das Phasengrenzflächenverfahren.

Die relative Lösungsviskosität ($\eta$ rel) der aromatischen Polyester und Polyestercarbonate liegt im Bereich 1,18 bis 1,4, vorzugsweise 1,22 bis 1,3 (gemessen an Lösungen von 0,5 g Polyester oder Polyestercarbonat in 100 ml $CH_2Cl_2$-Lösung bei 25°C).

Zur Herstellung der erfindungsgemäß stabilisierten aromatischen Polyester und Polyestercarbonate können die Phosphite den geschmolzenen Polymeren zugesetzt oder den Lösungen der aromatischen Polyester und Polyestercarbonate, vorzugsweise im Verlauf des Herstellungsverfahrens, zugemischt werden.

Durch Bestäuben oder Tränken der gepulverten oder granulierten aromatischen Polyester und Polyestercarbonate mit dem Phosphit (gegebenenfalls mit einer Lösung des Phosphits) vor der Verarbeitung lassen sich erfindungsgemäß stabilisierte Formkörper herstellen.

Die erfindungsgemäß stabilisierten aromatischen Polyester und Polyestercarbonate können außer den genannten Stabilisatoren noch andere und außerdem Füllstoffe, Verstärkungsstoffe, Farbstoffe, Pigmente und Verarbeitungshilfsmittel enthalten. Als solche kommen z.B.

in Betracht: Kreide, Talkum, Glas- und Asbestfasern, $TiO_2$, Phthalocyanine, CdS, ZnS, Fettsäureester.

Die Wirksamkeit der erfindungsgemäß verwendeten Phosphit-Stabilisatoren erstreckt sich auch auf Mischungen von aromatischen Polyestern und Polyestercarbonaten und außerdem auf Mischungen, an denen weitere Polykondensate und/oder Polymerisate beteiligt sind. Als solche sind u.a. zu nennen: Polycarbonate, Polyalkylenterephthalate, Polystyrol, ABS-Harze, Polyethylen, Polypropylen.

Die erfindungsgemäß hergestellten aromatischen Polyester und Polyestercarbonate können nach üblichen Verfahren in Spritzgießmaschinen zu Formkörpern und in Extrudern zu Halbzeugen verarbeitet werden.

## Beispiele

### Beispiel 1

Gemäß Vergleichsbeispiel 1 der DE-OS 2940024 wurde ein aromatischer Polyester unter Ersatz des Chlorbenzols durch 14 kg Dichlormethan hergestellt. Die erhaltene Lösung des Polyesters in Dichlormethan wurde eingeengt, bis sie ca. 15 Gew.-% Feststoff enthielt. Durch Einfliessenlassen dieser Lösung in das ca. 4-fache Volumen Cyclohexan unter kräftigem Rühren bei ca. 20°C wurde der Polyester in Form feiner Partikel abgeschieden. Nach dem Absaugen und Trocknen bei 100°C/0,037 bar während 12 Stunden blieb ein rieselfähiges Pulver zurück. Die relative Lösungsviskosität ($\eta$ rel) lag bei 1,337, der Gelbwert G nach DIN 6157 bei 18,5 (siehe unten).

### Beispiel 2

Nach Vergleichsbeispiel 1 der DE-OS 3007934 wurde ein Polyestercarbonat mit einem Esteranteil von 70 Mol-% hergestellt. Bei der Aufarbeitung wurde kein Chlorbenzol zugesetzt, sondern das Produkt aus der eingeengten Dichlormethanlösung mit dem 4-fachen Volumen Cyclohexan gefällt. $\eta$ rel betrug 1,276, der Gelbwert 17,3.

### Beispiel 3

Gemäß Vergleichsbeispiel 3 der DE-OS 3007934 wurde ein Polyestercarbonat mit einem Esteranteil von 30 Mol-% hergestellt. Die Fällung erfolgte mit Cyclohexan. $\eta$ rel lag bei 1,274, der Gelbwert bei 18,1.

Die relative Lösungsviskosität ($\eta$ rel) wurde an einer Lösung von 0,5 g Polyester in 100 ml $CH_2Cl_2$-Lösung bei 25°C gemessen.

Vergleich der Wirksamkeit der Stabilisatoren

A. Stabilisierung gegen thermischen Abbau unter Ausschluß von Luft

Je 20 g aromatischer Polyester (oder Polyestercarbonat) werden in einem Glaskolben in 100 ml $CH_2Cl_2$ gelöst und die in Tabelle 1 angegebenen Mengen von Stabilisatoren zugesetzt, diese ebenfalls gelöst und gleichmäßig verteilt, das Lösungsmittel sodann abgedampft und die Schmelze des Polymeren mit einem Edelstahlrührer 1/4 Stunde bei 350°C unter Stickstoff gerührt. Die relative Lösungsviskosität des Polymeren war dann auf die in Tabelle 1 angegebenen Werte abgefallen.

Zur Beurteilung der Farbveränderung wurden jeweils 4 g des Polymeren in 100 ml $CH_2Cl_2$ gelöst, an der Lösung in einer Schichtdicke von 10 cm (entsprechend einem gespritzten Prüfkörper von 4 mm Schichtdicke) mit Licht der Wellenlänge 400 - 700 nm (visueller Spektralbereich) die Transmission gemessen und gemäß DIN 6167 (z.Z. Entwurf von Dez. 1978) die Gelbwerte G errechnet.

Zugrundegelegt wurde Normlichtart C (Tageslicht) und der 2°-Normalbeobachter. Die so errechneten Gelbwerte stimmen mit den Werten des Yellowness-Indexes nach ASTM D 19-2570 überein.

Die Gelbwerte sind ebenfalls in Tabelle 1 aufgenommen. Die verglichenen Phosphite sind in Liste 1 zusammengestellt.

B. Stabilisierung gegen oxidativen Abbau an der Luft bei 180°C

Konzentrierte Lösungen des aromatischen Polyesters oder Polyestercarbonates (hergestellt wie unter A beschrieben) mit Stabilisatormengen wie in Tabelle 2 angegeben, wurden durch Ausstreichen auf Glasplatten und anschließendes Abdunsten des Methylenchlorids zu Folien von 50 µm Dicke verarbeitet. Diese wurden im Umlufttrockenschrank 1000 Stunden auf 180°C erhitzt. Die hierbei eingetretenen Veränderungen der relativen Lösungsviskosität und des Gelbwertes sind in Tabelle 2 zusammengestellt.

Tabelle 1: Thermischer Abbau unter Stickstoff bei 350°C nach 1/4 Stunde

| | | Polyester von Beispiel | Stabilisator von Liste 1 | Menge in Gew.-% vom Polymeren | $\eta_{rel}$ | Gelbwert G |
|---|---|---|---|---|---|---|
| Vgl.-Beispiel | 1 | 1 | - | - | 1,307 | 108,5 |
| | 2 | 2 | - | - | 1,251 | 102,7 |
| | 3 | 3 | - | - | 1,253 | 97,0 |
| | 4 | 1 | I | 0,05 | 1,318 | 73,5 |
| | 5 | 1 | II | 0,05 | 1,314 | 69,0 |
| | 6 | 1 | III | 0,05 | 1,321 | 67,3 |
| | 7 | 1 | III | 0,10 | 1,323 | 64,9 |
| | 8 | 2 | II | 0,05 | 1.263 | 81,8 |
| | 9 | 3 | III | 0,05 | 1,259 | 72,1 |
| Beispiel | 4 | 1 | IV | 0,05 | 1,329 | 46,0 |
| | 5 | 1 | V | 0,05 | 1,332 | 25,7 |
| | 6 | 1 | VI | 0,05 | 1,330 | 32,2 |
| | 7 | 1 | VII | 0,05 | 1,330 | 28,4 |
| | 8 | 2 | V | 0,05 | 1,271 | 31,6 |
| | 9 | 3 | V | 0,05 | 1,268 | 34,1 |
| | 10 | 2 | V | 0,10 | 1,274 | 23,0 |

Tabelle 2: Oxidativer Abbau an der Luft bei 180°C nach 1000 Stunden

| | | Polyester von Beispiel | Stabilisator von Liste 1 | Menge in Gew.-% vom Polymeren | $\eta_{rel}$ | Gelbwert G |
|---|---|---|---|---|---|---|
| Vgl.-Beispiel | 10 | 1 | - | - | 1,241 | 95,6 |
| | 11 | 2 | - | - | 1,187 | 103,5 |
| | 12 | 3 | - | - | 1,193 | 98,0 |
| | 13 | 1 | I | 0,05 | 1,285 | 77,3 |
| | 14 | 1 | II | 0,05 | 1,281 | 71,9 |
| | 15 | 1 | III | 0,05 | 1,296 | 67,4 |
| | 16 | 1 | III | 0,10 | 1,302 | 63,1 |
| | 17 | 2 | II | 0,05 | 1,225 | 74,0 |
| | 18 | 3 | III | 0,05 | 1,230 | 64,6 |
| Beispiel | 11 | 1 | IV | 0,05 | 1,316 | 55,8 |
| | 12 | 1 | V | 0,05 | 1,321 | 41,2 |
| | 13 | 1 | VI | 0,05 | 1,312 | 45,0 |
| | 14 | 1 | VII | 0,05 | 1,319 | 43,7 |
| | 15 | 2 | V | 0,05 | 1,268 | 38,5 |
| | 16 | 3 | V | 0,05 | 1,265 | 42,4 |
| | 17 | 2 | V | 0,10 | 1,270 | 35,7 |

Liste 1

Verzeichnis der verglichenen Phosphit-Stabilisatoren

I 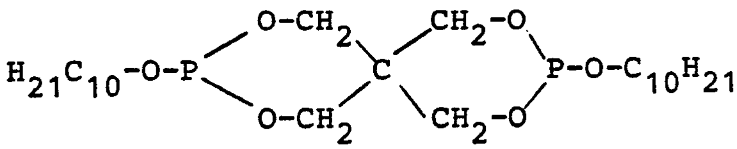

II 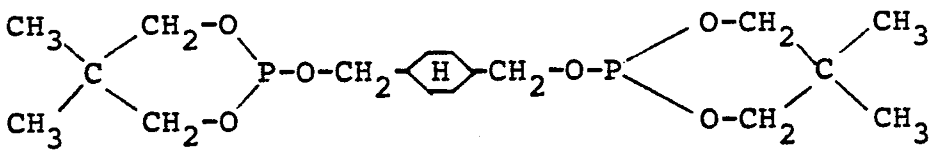

III Tris-(2-ethyl-oxetan-2-yl-methyl)-phosphit gemäß JA 55 069 647 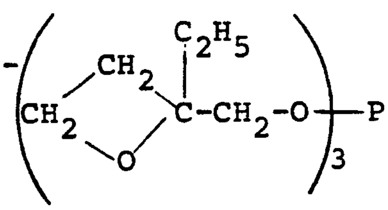

IV 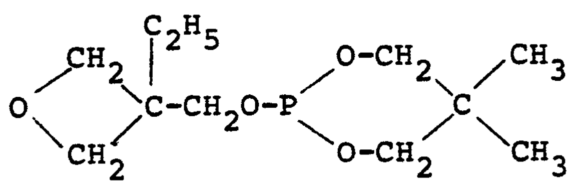

V 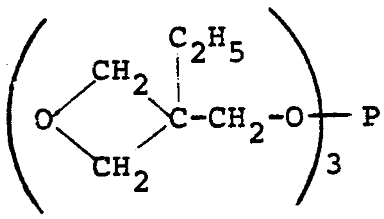

VI 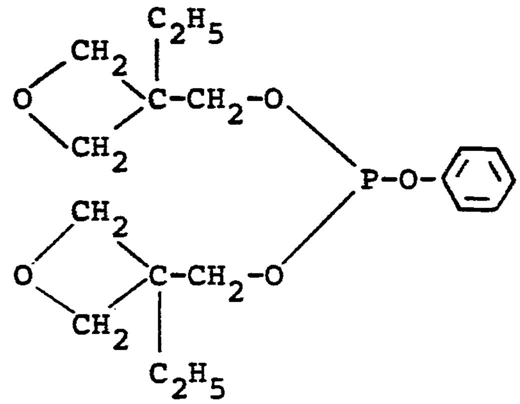

VII 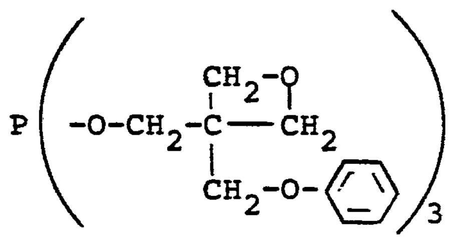

## Patentansprüche

1. Gegen thermischen, oxidativen Abbau und Verfärbung stabilisierte Formmassen auf Basis von aromatischen Polyestern und Polyestercarbonaten, dadurch gekennzeichnet, daß sie als Stabilisatoren 0,01 - 2 Gew.-% von in Position 3 substituierten Oxetangruppen-haltigen Estern der phosphorigen Säure enthalten.

2. Stabilisierte Formmassen nach Anspruch 1, dadurch gekennzeichnet, daß die aromatischen Polyester und Polyestercarbonate aus Iso- und/oder Terephthalsäure und 2,2-Bis-(4-hydroxyphenyl)-propan (Bisphenol A) und/oder mit Alkylgruppen und/oder Halogen substituiertem Bisphenol A und gegebenenfalls Kohlensäure aufgebaut sind.

3. Formmassen nach Anspruch 1, die als Stabilisatoren 0,01 bis 2, bevorzugt 0,05 bis 1 Gew.-% von Phosphiten der Formel I enthalten,

$$\begin{array}{l} OR_1 \\ | \\ P\text{-}OR_2 \\ | \\ OR_3 \end{array} \qquad (I)$$

worin mindestens einer der Reste $R_1$ bis $R_3$ der Formel

$$\begin{array}{lll} & & R_4 \\ & & | \\ -R_5\text{-}CH_2 & \text{-} & C\text{-}CH_2 \\ & & |\quad\;\; | \\ & & H_2C\text{-}O \end{array} \qquad (II)$$

0150497

entsprechen,

$R_4$ einen $C_1$- bis $C_6$-Alkylrest darstellt oder mit $R_1$ eines anderen P-Atoms zusammen einen Hexahydro-p-xylylenrest oder $-(CH_2)_x-$ mit x = 1 bis 6, worin die übrigen Reste $R_1$ bis $R_3$ $C_1$- bis $C_{10}$- und Alkylreste oder durch bis zu 2 $C_1$-$C_6$-Alkyl- oder Cycloalkylreste substituierte Phenylreste sind, und $R_5$ eine einfache Bindung, Phenylen oder Oxiphenylen ist.